# FASCICULE DE BREVET EUROPEEN

(11) **EP 1 660 882 B1**
(45) Date de publication et mention de la délivrance du brevet: **22.10.2008**
(21) Numéro de dépôt: 04786345.1
(22) Date de dépôt: 23.08.2004
(51) Int. Cl.: G01N 27/447

(54) **PROCEDE DE SEPARATION BIDIMENSIONNELLE PAR ELECTROPHORESE CAPILLAIRE REALISE DANS UN SEUL CAPILLAIRE**
ZWEIDIMENSIONALE TRENNUNG MITTELS IN EINER EINZELNEN KAPILLARE DURCHGEFÜHRTER KAPILLARELEKTROPHORESE
BIDIMENSIONAL SEPARATION BY MEANS OF CAPILLARY ELECTROPHORESIS CARRIED OUT IN A SINGLE CAPILLARY

(30) Priorité: 29.08.2003 FR 0310299
(43) Date de publication de la demande: 31.05.2006
(73) Titulaire: CENTRE NATIONAL DE LA RECHERCHE SCIENTIFIQUE (CNRS), 75016 Paris (FR); Université de Montpellier II, 34095 Montpellier Cedex 5 (FR)
(72) Inventeur: BIRON, Jean-Philippe, F-34980 SAINT GELY DU FESC (FR); COTTET, Hervé, 36, allée Volta, F-34000 MONTPELLIER (FR)
(74) Mandataire: Colombet, Alain André
(86) Numéro de dépôt international: PCT/FR2004/002181
(87) Numéro de publication internationale: WO 2005/024410

(56) Documents cités:
- WO-A-03/015901
- PATENT ABSTRACTS OF JAPAN vol. 007, no. 096 (P-193), 22 avril 1983 (1983-04-22) & JP 58 021553 A (SHIMAZU SEISAKUSHO KK), 8 février 1983 (1983-02-08)
- N.J. REINHOUD ET AL: "automated isotachophoretic analyte focusing for capillary zone electrophoresis in a single capillary using hydrodynamic back-pressure programming" JOURNAL OF CHROMATOGRAPHY, vol. 641, 1993, pages 155-162, XP008028909 nl
- PATENT ABSTRACTS OF JAPAN vol. 007, no. 096 (P-193), 22 avril 1983 (1983-04-22) & JP 58 021552 A (SHIMAZU SEISAKUSHO KK), 8 février 1983 (1983-02-08)

## Description

La présente invention a trait à une méthode de séparation bidimensionnelle des constituants d'un mélange, mettant en oeuvre la technique de l'électrophorèse capillaire conduite au sein d'un capillaire ou d'un système équivalent tel qu'un système de type "microchip". Cette méthode, en particulier adaptée à la séparation de mélanges de polymères (synthétiques ou naturels) chargés électriquement, tels que des mélanges de protéines ou de peptides, s'avère notamment utile pour l'analyse des constituants de tels mélanges.

Les techniques de séparation dites "bidimensionnelles" consistent à effectuer la séparation des constituants d'un mélange selon deux critères successifs distincts. Ainsi, ces méthodes mettent en général en oeuvre une première étape qui consiste à séparer les constituants du mélange dans de premières conditions de séparation, puis une deuxième étape consistant à soumettre tout ou partie des fractions séparées obtenues à l'issue de la première étape à une nouvelle séparation dans de nouvelles conditions. Les deux étapes successives de séparation utilisées dans ces procédés mettent généralement en oeuvre deux séparations de types différents, fondées sur deux caractéristiques distinctes des constituants à séparer. Ces deux étapes de séparation successives sont dites "orthogonales" entre elles.

Le terme de "séparation bidimensionnelle" provient du fait qu'à l'origine, ce type de séparation désigne une séparation effectuée sur des supports à deux dimensions, tel que des plaques. Ainsi, par exemple, la chromatographie bidimensionnelle consiste à déposer un échantillon de mélange sur une plaque, à réaliser une élution du mélange par un premier éluant dans une première direction de la plaque, puis à éluer chacune des fractions séparées du mélange (alignées selon la première direction) à l'aide d'un second éluant dans une direction orthogonale à la première direction, ce par quoi on obtient une séparation des constituants dans les deux dimensions de la plaque. De façon similaire, on a développé des techniques bidimensionnelles d'électrophorèse sur couche de gel, comprenant une première séparation électrophorétique des composés d'un mélange par migration selon une première direction du gel, suivie d'une seconde migration dans une direction orthogonale, dans d'autres conditions d'électrophorèse. Ces techniques sont largement utilisées, notamment dans le domaine de la séparation et de l'analyse de mélanges de protéines. Dans ce cadre, on a notamment développé des techniques d'électrophorèse bidimensionnelle sur gel dites (IEF/SDS-PAGE), adaptées à la séparation de protéines ou de peptides, dans lesquelles la première séparation est effectuée par une focalisation isoélectrique (IEF) qui permet une séparation selon le point isoélectrique dans une première direction du gel, et à la seconde étape est une migration électrophorétique dans une direction orthogonale, réalisée en présence d'un gel de polyacrylamide et de dodécylsulfate de sodium (SDS-PAGE). Pour plus de renseignements concernant les techniques d'électrophorèses bidimensionnelles, et notamment les techniques de type (IEF/SDS-PAGE), on pourra notamment se reporter à l'article de P. A. Haynes, S. P. Gygi, D. Figeys, R. Aebersold, dans Electrophoresis, 19, 1862-1871 (1998).

Par extension, le terme de séparation "bidimensionnelle" a ensuite été étendu à toute méthode mettant en oeuvre deux étapes de séparation monodimensionnelle successives, et où la deuxième étape consiste à séparer les composés d'au moins une des fractions séparées lors de la première étape. Par analogie avec les techniques sur support bidimensionnel, on dit que la deuxième étape de séparation est effectuée "selon une direction orthogonale", même dans les cas où aucun support bidimensionnel n'est concrètement mis en oeuvre.

Différentes techniques de séparation bidimensionnelles sont actuellement connues, qui couplent deux (voire plusieurs) étapes successives de séparations "monodimensionnelles" telle que des étapes de chromatographie ou d'électrophorèse. A titre d'exemples de techniques de séparation bidimensionnelle de ce type, on peut notamment citer les techniques décrites dans l'ouvrage High Performance Capillary Electrophoresis, Chemical Analysis Series, vol. 146, n°17, 581-612 (1998) ou celles décrites par J. M. Hille, A.L. Freed, et H. Watzig, dans Electrophoresis, 22, 4035-4052 (2001).

En particulier, on a développé des techniques de séparation bidimensionnelles mettant en oeuvre au moins une étape d'électrophorèse capillaire dans leurs étapes de séparation. Dans ce cadre, certains auteurs ont notamment décrit le couplage de deux étapes successives d'électrophorèse capillaire. A ce sujet, on pourra notamment se reporter aux articles de Mark R; Shure dans Anal.Chem. 71, 1645-1657 (1999), ou de Deepa Mohan et Cheng S. Lee dans Electrophoresis 23, 3160-3167 (2002).

Ces méthodes de séparation bidimensionnelle semblent *a priori* séduisantes, notamment dans la mesure où elles semblent à même de combiner les avantages de la séparation bidimensionnelle à l'efficacité particulièrement prononcée de la séparation électrophorétique. Toutefois, en pratique, ces méthodes nécessitent en général la mise en oeuvre de dispositifs complexes et le plus souvent onéreux, et la séparation réalisée n'est pas toujours à la hauteur de la qualité escomptée.

En particulier, les techniques mettant en oeuvre deux étapes successives d'électrophorèse capillaire consistent actuellement à réaliser le couplage de deux capillaires, de façon à pouvoir réaliser les deux électrophorèses dans des milieux distincts. Ce couplage de deux capillaires est en général difficile à mettre en oeuvre, et il nécessite des dispositifs de couplages souvent onéreux. De plus, comme souligné notamment par Shure et al. dans Anal.Chem. 71, 1645-1657 (1999), la mise en oeuvre de ces dispositifs de couplage affecte en général la qualité de la séparation réalisée, en conduisant notamment à des phénomènes d'étalement des pics qui ne peuvent être limités que très difficilement. De plus, le couplage de deux capillaires passe le plus souvent par des étapes d'échantillonnage, au cours desquelles une partie des composés à analyser est susceptible d'être perdue, ou par des processus de dilution qui s'avèrent notamment préjudiciables pour la sensibilité de la détection des composés séparés, tout particulièrement lorsque le mélange initial à analyser est un milieu dilué. Une autre technique mettant en oeuvre des étapes successives d'électrophorèse capillaire consiste à utiliser un capillaire associé à un tube de stockage, permettant de stocker temporairement une fraction des composés isolée lors d'une première étape, avant de la réinjecter dans le même capillaire mais remplit d'un second milieu sparateur, voir JP 58021553.

Ainsi, les techniques de séparation bidimensionnelle par couplage de deux étapes successives d'électrophorèse capillaire actuellement connues s'avèrent insatisfaisantes, en terme d'efficacité et/ou de coût. Compte tenu de ces inconvénients, ce type de séparation bidimensionnelle est très peu utilisé en pratique.

Or, contre toute attente, les inventeurs ont maintenant découvert qu'il est possible de réaliser une séparation bidimensionnelle mettant en oeuvre deux étapes successives d'électrophorèse capillaire de façon particulièrement simple et performante, en mettant en oeuvre pour les deux étapes d'électrophorèse un unique capillaire, ce qui permet notamment de s'affranchir des problèmes techniques et/ou de coût liés à la mise en oeuvre des systèmes de couplage capillaire/capillaire actuellement utilisés.

Plus précisément, les travaux des inventeurs ont permis d'établir que si, suite à une séparation par électrophorèse réalisée au sein d'un capillaire, on isole, dans le capillaire utilisé, une fraction des composés séparés, il est ensuite possible, sans utiliser de capillaire supplémentaire, d'effectuer une nouvelle séparation de la fraction isolée par électrophorèse, en injectant dans le capillaire un milieu séparateur ayant une vitesse de migration plus importante que la fraction isolée au sein du capillaire.

Il s'avère en outre que la séparation ainsi effectuée est particulièrement efficace, et que, dans la plupart des cas, la séparation peut être obtenue sans observer les phénomènes d'élargissement de pics qui sont généralement obtenus dans le cadre de procédés de séparation actuellement connus qui couplent deux étapes d'électrophorèse capillaire.

Sur la base de ces découvertes, un but de la présente invention est de fournir un procédé de séparation bidimensionnelle mettant en oeuvre deux étapes successives d'électrophorèse capillaire, qui soit à la fois efficace et peu onéreux. Dans ce cadre, l'invention se fixe en particulier pour but de fournir un procédé de séparation bidimensionnelle par électrophorèse capillaire, qui s'affranchisse des inconvénients liés à l'utilisation des systèmes de couplage capillaire/capillaire mis en oeuvre dans les techniques d'électrophorèse capillaire bidimensionnelle actuellement connues.

A cet effet, selon un premier aspect, l'invention a pour objet un procédé de séparation des constituants d'un mélange comprenant des composés électriquement chargés, par électrophorèse capillaire au sein d'un unique capillaire, ledit procédé comprenant les étapes consistant à :
(A) introduire et faire migrer les composés du mélange au sein du capillaire selon la technique de l'électrophorèse capillaire, (à savoir sous l'effet d'une différence de potentiel appliquée entre l'entrée et la sortie du capillaire), de façon à réaliser une séparation des composés du mélange au sein du capillaire, selon leur vitesse de migration dans les conditions de l'étape (A) ;
(B) isoler dans le capillaire une fraction des composés séparés dans l'étape (A), en mettant en oeuvre l'une et/ou l'autres des étapes suivantes :
   (B.1) évacuer hors du capillaire une partie des composés ayant les vitesses de migration les plus élevées dans les conditions de l'électrophorèse de l'étape (A), en laissant migrer ces composés en sortie du capillaire, le plus souvent en maintenant la différence de potentiel de l'étape (A) ; et/ou
   (B.2) évacuer hors du capillaire une partie des composés ayant les vitesses de migration les plus faibles dans les conditions de l'électrophorèse de l'étape (A), en faisant migrer ces composés vers l'entrée du capillaire, en général en appliquant une surpression en sortie du capillaire et/ou en appliquant entre l'entrée et la sortie du capillaire une différence de potentiel
   de polarité contraire à celle de l'étape (A),
   cette étape (B) étant éventuellement suivie d'une étape (B') consistant à faire éventuellement migrer la fraction isolée vers l'entrée de la colonne ; et
(C) sous l'effet d'une différence de potentiel appliquée entre l'entrée et la sortie du capillaire, (qui induit un flux électroosmotique), introduire, dans le capillaire contenant la fraction isolée, un milieu séparateur ayant une vitesse de migration supérieure à celle des composés de la fraction, de façon que ledit milieu séparateur rattrape la fraction isolée au sein du capillaire, et modifie ainsi l'environnement de la fraction, et par conséquent les conditions d'électrophorèse de cette fraction, et maintenir la différence de potentiel jusqu'à obtenir une séparation des composés compris dans la fraction isolée en fonction de leur vitesse de migration dans les nouvelles conditions d'électrophorèse obtenues.

Ainsi, le procédé de l'invention est un procédé de séparation bidimensionnelle des composés du mélange, permettant de réaliser une première séparation des constituants du mélange par électrophorèse capillaire ("première dimension" de l'étape (A)), suivie d'une deuxième séparation des constituants d'une fraction des composés ainsi séparés ("deuxième dimension" de l'étape (C)). De façon caractéristique, dans le procédé de l'invention, ces deux séparations successives sont réalisées au sein d'un même et unique capillaire, ce qui est permis par l'étape d'isolation (B).

Le terme "unique capillaire" tel qu'utilisé dans la présente description désigne le plus souvent un capillaire tel qu'utilisé dans la technique conventionnelle d'électrophorèse capillaire, mais il peut désigner aussi des systèmes équivalent à de tels capillaires, tels que les systèmes de type "microchip" décrits par exemple dans Microfabricated capillary electrophoresis amino acid chirality analyser for extraterrestrial exploration, Hutt, L. D., Glavin, D.P., Bada, J.L., Mathies, R.A., Anal. Chem. 1999, 71, 4000-4006. Bien que la présente description fasse surtout référence à une électrophorèse capillaire mise en oeuvre au sein d'un système capillaire conventionnel, il est entendu que les principes énoncés pour ce type d'électrophorèse sont tout à fait transposables à une utilisation de systèmes analogues tels que les systèmes "microchip".

Le mélange dont on sépare les constituants selon le procédé de l'invention peut être tout mélange de composés électriquement chargés, adapté à une séparation par électrophorèse capillaire. Pour plus de précisions concernant les mélanges séparables par électrophorèse capillaire, on pourra notamment se reporter à l'article de M. G. Khaledi dans High Performance Capillary Electrophoresis, Chemical Analysis Series, vol. 146, (1998), ou encore à l'ouvrage de S. F. Y. Li "Capillary electrophoresis: principles, practice and applications" Journal of Chromatography Library, vol. 52, troisième impression (1996).

En général, le mélange est un mélange de plusieurs composés chargés, de même charge. Ainsi, selon un premier mode de réalisation, le mélange est un mélange d'espèces chargées négativement, tel que, par exemple, un mélange comprenant des polymères synthétiques porteurs de groupements anioniques et/ou de charge négatives, des protéines et/ou des peptides à un pH suffisamment élevé pour qu'elles portent des charges négatives, de polysaccharides chargés négativement, et/ou de molécules anioniques (par exemple des acides sous forme déprotonée, notamment des acides organiques déprotonés). Selon un autre mode de mise en oeuvre, le mélange est un mélange d'espèces chargées positivement, comprenant par exemple des polymères synthétiques chargés positivement porteurs de groupements cationiques et/ou de charge positives, de protéines et/ou de peptides à un pH suffisamment faible pour qu'elles portent des charges positives, de polysaccharides chargés positivement, ou des molécules cationiques (par exemple des bases sous forme protonée, et notamment des bases organiques protonées).

Dans les étapes d'électrophorèse capillaires (A) et (C) précitées, on préfère le plus souvent que les espèces chargées à séparer migrent dans le capillaire à contre-flux électroosmotique. A cet effet, on préfère que la surface interne du capillaire utilisé soit recouverte par des charges de même signe que celles des espèces chargées à séparer dans le mélange.

Ainsi, lorsque le mélange est un mélange d'espèces chargées négativement, le capillaire mis en oeuvre est avantageusement un capillaire dont la surface interne est porteuse de charges négatives. Ainsi, il peut s'agir d'un capillaire ayant une paroi interne de silice vierge (qui est chargée négativement en milieu aqueux de pH supérieur à 2), cette paroi pouvant éventuellement être recouverte par des groupements protecteurs anioniques (par exemple des groupements sulfonates), ou bien par plusieurs couches de polyélectrolytes, avec une dernière couche (en contact avec le milieu interne du capillaire) à base d'un polyélectrolyte anionique, tel que, par exemple, un dextrane sulfate. Une telle modification de la surface d'un capillaire de silice par des multicouches de polyélectrolytes, est décrite notamment par H. Katayama, Y. Ishihama et al. dans Anal. Chem., 70, 2254-2260 (1998). L'utilisation de capillaire de silice de surface interne modifiée des types précités s'avère notamment avantageuse lorsque tout ou partie des composé du mélange sont susceptibles d'interagir avec la silice, et en particulier de se fixer sur les groupements de type silanols que présente une paroi de silice.

Lorsque le mélange est un mélange d'espèces chargées positivement, le capillaire mis en oeuvre est avantageusement un capillaire dont la surface interne est porteuse de charges positives, tel qu'un capillaire de silice greffé par des groupements ammonium quaternaire, ou recouvert avec des multicouches de polyélectrolytes dont la dernière couche est un polyélectrolyte cationique tel que, par exemple, le polybrène.

De façon plus générale, l'étape (A) du procédé de l'invention est une étape de séparation par électrophorèse capillaire classique, qui est avantageusement conduite de façon à séparer au mieux les constituants du mélange, en général selon leur charge ou selon leur rapport charge/masse. Il est des compétences du spécialiste en électrophorèse d'adapter les conditions à mettre en oeuvre pour obtenir une séparation la plus efficace possible dans l'étape (A). Pour plus de détails concernant les conditions générales de mise en oeuvre d'une électrophorèse conduite de façon à séparer un mélange de composés selon leur charge ou selon leur rapport charge/masse, on pourra notamment se reporter à l'article de M. G. Khaledi dans High Performance Capillary Electrophoresis, Chemical Analysis Series, vol. 146, (1998), ou à l'ouvrage précité de S. F. Y. Li "Capillary electrophoresis : principles, practice and applications", Journal of Chromatography Library, vol. 52, troisième impression (1996).

A l'issue de l'électrophorèse de l'étape (A), on obtient, de façon générale, une séparation des composés du mélange en plusieurs fractions, chacune de ces fractions comprenant les composés ayant une vitesse de migration donnée dans les conditions de l'étape (A). Chacune de ces fractions apparaît sous la forme d'un pic unique sur un électrophérogramme. Toutefois, en particulier dans le cas de mélanges complexes tels que des mélanges de protéines, chacun des pics observés contient souvent un mélange de plusieurs constituants.

La fraction isolée dans l'étape (B) est un mélange de composés ayant des vitesses de migration comprises entre deux valeurs de coupure Vₘᵢₙ et Vₘₐₓ (avec Vₘᵢₙ<Vₘₐₓ) dans les conditions de l'électrophorèse l'étape (A). L'étape (B.1), lorsqu'elle est conduite, consiste à évacuer hors du capillaire les composés ayant des vitesses de migration supérieures à Vₘₐₓ. De même, l'étape (B.2), lorsqu'elle est conduite, consiste à évacuer hors du capillaire les composés ayant des vitesses de migration supérieures à V_{min.}

Le plus souvent, la fraction isolée dans l'étape (B) est un mélange de composés ayant sensiblement la même vitesse de migration dans les conditions de l'électrophorèse de l'étape (A), à savoir une fraction constituée par les composés correspondant à un des pics électrophorétiques obtenu suite à l'électrophorèse de l'étape (A). L'étape (B) consiste alors à évacuer hors du capillaire les composés ayant une vitesse de migration différente, correspondant aux autres pics de l'électrophérogramme, et l'étape (C) consiste à effectuer une séparation des constituants du mélange de composés correspondant au pic isolé dans le capillaire. L'isolation d'une fraction constituée par les composés correspondant à un pic électrophorétique unique s'avère souvent avantageuse, notamment dans la mesure où elle présente l'avantage d'éviter tout phénomène de recouvrement de pics lors de la séparation électrophorétique de l'étape (C).

Toutefois, selon un mode de réalisation envisageable, la fraction isolée dans l'étape (B) peut également être un mélange de composés correspondant à une série de pics électrophorétiques successifs obtenu suite à l'électrophorèse de l'étape (A). Dans ce cas, l'étape (B) consiste à évacuer hors du capillaire les composés correspondant aux pics de l'électrophérogramme situés avant et/ou après la série de pics à isoler.

En fonction de la fraction qu'on souhaite isoler dans l'étape (B), trois grands modes de réalisation sont envisageables pour l'étape (B).

Ainsi, selon un premier mode de réalisation du procédé de l'invention, la fraction est une fraction de tête, à savoir une fraction constituée par un mélange de composés ayant une ou des vitesse(s) de migration supérieure(s) à celle des composés qu'on fait migrer hors du capillaire. Dans ce cas, l'étape (B) consiste à mettre en oeuvre uniquement l'étape (B.2), sans mettre en oeuvre l'étape (B.1).

Selon ce premier mode de réalisation, la fraction isolée dans l'étape (B) est avantageusement constituée par les composés du pic de tête observable sur un électrophérogramme de l'électrophorèse de l'étape (A), à savoir un mélange des composés ayant la vitesse de migration (V_{tête}) la plus élevée dans les conditions de l'électrophorèse de l'étape (A), qui apparaissent donc en premier sur un électrophérogramme de l'électrophorèse de l'étape (A). Dans ce cas, l'étape (B.2) consiste à faire sortir du capillaire les autres composés que les composés du pic de tête, qui ont une vitesse de migration inférieure à V_{tête}.

Alternativement, la fraction de tête isolée dans l'étape (B) peut être constituée par les composés de deux ou plusieurs des premiers pics apparaissant sur un électrophérogramme de l'électrophorèse de l'étape (A). Le cas échéant, l'étape (B.2) consiste à faire sortir du capillaire les composés correspondant aux autres pics.

Pour isoler une fraction de tête, quelle que soit sa nature (composés correspondant à un unique pic électrophorétique ou à plusieurs pics), l'étape (B.2) peut avantageusement consister à appliquer une surpression en sortie du capillaire, jusqu'à faire sortir par l'entrée du capillaire les composés ne faisant pas partie de la fraction de tête à isoler.

Par "application d'une surpression en sortie du capillaire", on entend, au sens de la description et des revendications, l'application d'une différence de pression positive entre la sortie et l'entrée du capillaire. En pratique, cette différence de pression positive est généralement induite en appliquant une surpression au niveau de la sortie du capillaire. Toutefois, selon certains modes de réalisation particuliers, cette différence de pression peut également être induite en appliquant une dépression à l'entrée du capillaire, éventuellement conjointement à une surpression à la sortie du capillaire. La "surpression en sortie du capillaire" à laquelle il est fait référence dans le présent document désigne de façon générale la différence de pression positive appliquée entre la sortie et l'entrée du capillaire.

Lorsqu'une surpression est appliquée en sortie du capillaire, le diamètre du capillaire utilisé est avantageusement inférieur à 50 microns et plus préférentiellement inférieur ou égal à 30 microns et encore plus avantageusement inférieur ou égal à 20 microns, et la surpression imposée en sortie du capillaire est de préférence la plus faible possible, notamment de façon à éviter des phénomènes de dispersion, qui se traduiraient par un étalement des pics observés sur un électrophérogramme, ce qui nuirait à la qualité de la séparation obtenue. Ainsi, on préfère en général que la surpression imposée dans l'étape (B) soit une surpression inférieure à 100 millibars, et de préférence inférieure à 80 millibars, avantageusement inférieure 1 psi, (inférieure à 69 millibars) [valeurs indicatives, explicitées ci-après]. Le plus souvent, la valeur limite de la surpression imposable sans observer un étalement de pic trop important est à adapter en fonction du diamètre interne du capillaire employé. Ainsi, plus le capillaire sera fin, plus une surpression importante pourra être imposée. A titre d'exemple, pour un capillaire de diamètre interne inférieur à 20 microns (10 microns par exemple), on pourra envisager d'imposer une surpression allant jusqu'à 100 millibars, voire jusqu'à 2 psi (138 millibars) sans observer de phénomènes de dispersion trop marqués. En revanche, pour des capillaires de diamètre interne compris entre 20 et 30 microns (typiquement 25 microns), il est préférable de ne pas dépasser une surpression de 1 psi (69 millibars). Pour des capillaires de diamètre interne supérieurs à 30 microns, la surpression envisageable sans observer de phénomènes de dispersion gênant est de préférence inférieure à 0,5 psi, et encore plus avantageusement inférieure à 0,2 psi. Pour un diamètre interne de 50 microns, il est préférable de ne pas dépasser 0,1 psi.

Alternativement, dans certains cas, l'étape (B.2) mise en oeuvre pour isoler une fraction de tête peut également consister à :
(i) appliquer, entre l'entrée et la sortie du capillaire, une différence de potentiel, de polarité contraire à celle de l'étape (A), en prenant soin de ne pas recombiner la fraction à isoler avec les autres composés séparés du mélange; puis
(ii) appliquer une surpression en sortie du capillaire jusqu'à faire sortir par l'entrée du capillaire les composés ne faisant pas partie de la fraction de tête à isoler, le plus souvent en maintenant la différence de potentiel de l'étape (i).

La mise en oeuvre des étapes (i) et (ii) précitées pour réaliser l'étape (B.2) permet notamment de limiter les phénomènes d'étalement des pics qui peut être observé lorsque (B.2) consister uniquement à appliquer une surpression en sortie du capillaire.

Lorsqu'elle est mise en oeuvre, l'étape (i) est conduite pendant une durée suffisamment courte pour ne pas mener à une recombinaison du ou des pic(s) de tête à isoler avec les pics qu'on souhaite éliminer du capillaire. Lorsque la fraction à isoler n'est pas constituée d'un seul pic de tête, mais de plusieurs, l'étape (i) est en outre avantageusement conduite pendant un temps suffisamment court pour qu'on n'observe pas de recombinaison des pics de la fraction à isoler. En pratique, la différence de potentiel appliquée entre la sortie et l'entrée du capillaire dans l'étape (i) est en général la même différence de potentiel (en valeur absolue) que celle appliquée dans l'étape (A), mais avec un signe opposé. En d'autres termes, l'étape (i) est avantageusement conduite en inversant la polarité aux bornes du capillaire, par rapport à l'étape (A). En particulier dans ce cas, la durée de mise en oeuvre de l'étape (i) peut être facilement déterminée à l'aide d'un électrophérogramme de l'électrophorèse de l'étape (A), qui donne accès à la vitesse de migration de chacun des composés et à l'espacement des différents pics entre eux. Ces deux paramètres permettent de calculer l'espacement de deux pics après inversion de la polarité pendant une durée donnée. De préférence, lorsqu'elle est mise en oeuvre, l'étape (i) est de préférence conduite de façon à ce que l'espacement entre la fraction à isoler et les autres pics à éliminer soit d'au moins 5 mm, et de préférence d'au moins 10 mm au sein du capillaire.

Lorsqu'on met en oeuvre la succession d'étape (i) et (ii) à titre d'étape (B.2) pour isoler une fraction de tête, la surpression imposée dans l'étape (ii) à la sortie du capillaire est de préférence une surpression inférieure à 100 millibars, cette surpression étant avantageusement inférieure à 80 millibars, et avantageusement inférieure à 1 psi (69 millibars), en particulier lorsque le capillaire utilisé a un diamètre interne compris entre 20 et 50 microns. Là encore, la valeur limite de la surpression imposable dépend du diamètre interne du capillaire utilisé.

Selon un deuxième mode de réalisation du procédé de l'invention, l'étape (B) consiste à mettre en oeuvre l'étape (B.1) pour évacuer une fraction de tête, puis l'étape (B.2) pour évacuer une fraction de queue, et la fraction isolée dans l'étape (B) est alors une fraction de coeur.

Selon ce deuxième mode de réalisation, la fraction de coeur isolée est avantageusement constituée par les composés d'un des pics compris entre le pic de queue et le pic de tête observables sur un électrophérogramme de l'électrophorèse de l'étape (A), à savoir un mélange des composés ayant une même vitesse de migration V dans les conditions de l'électrophorèse de l'étape (A), intermédiaire entre la vitesse des composés de tête (V_{tête}) et la vitesse des composés de queue (V_{queue}). Dans ce cas, l'étape (B.1) consiste à faire sortir du capillaire tous les composés de vitesse de migration supérieure à V, et l'étape (B.2) consiste à faire sortir du capillaire tous les composés de vitesse de migration inférieure à V.

Alternativement, selon ce deuxième mode, la fraction de coeur isolée dans l'étape (B) peut être constituée par les composés de deux ou plusieurs pics intermédiaires compris entre le pic de queue et le pic de tête, à savoir un mélange des composés ayant des vitesses de migration comprise entre une valeur V' supérieure à V_{queue} et une valeur V" supérieure à V' et inférieure à V_{tête} dans les conditions de l'électrophorèse de l'étape (A). Le cas échéant, l'étape (B.1) consiste à faire sortir du capillaire tous les composés de vitesse de migration supérieure à V", et l'étape (B.2) consiste à faire sortir du capillaire tous les composés de vitesse de migration inférieure à V'.

Ainsi, l'isolation d'une fraction de coeur passe par une première étape (B.1) qui consiste à éliminer une fraction de tête, ce par quoi la fraction à isoler devient la fraction de tête dans le capillaire. Dès lors, l'isolation de cette fraction revient à isoler une fraction de tête selon l'étape (B.2), comme dans le premier mode de réalisation du procédé. Ainsi, pour isoler une fraction de coeur, l'étape (B.2) mise en oeuvre suite à l'étape (B.1) est avantageusement être conduite dans les conditions du premier mode de réalisation du procédé.

Ainsi, l'étape (B.2) utilisée dans la cadre de l'isolation d'une fraction de coeur consiste de préférence à :
- selon une première possibilité : appliquer une surpression en sortie du capillaire, de préférences dans les gammes avantageuse indiquées pour le premier mode de réalisation du procédé, jusqu'à faire sortir par l'entrée du capillaire les composés ne faisant pas partie de la fraction de tête à isoler, à savoir les composés de vitesse de migration inférieure à V' dans les conditions de l'électrophorèse de l'étape (A) ; ou
- selon une deuxième possibilité, adaptée notamment pour limiter les phénomènes d'étalement des pics :

(i) appliquer, entre l'entrée et la sortie du capillaire, une différence de potentiel, de polarité contraire à celle de l'étape (A), en prenant soin de ne pas recombiner la fraction à isoler avec les autres composés séparés du mélange ; puis
(ii) appliquer une surpression en sortie du capillaire, de préférences dans les gammes avantageuse indiquées pour le premier mode de réalisation du procédé, jusqu'à faire sortir par l'entrée du capillaire les composés ne faisant pas partie de la fraction de tête à isoler, à savoir les composés de vitesse de migration inférieure à V' dans les conditions de l'électrophorèse de l'étape (A).

Selon un troisième mode de réalisation du procédé de l'invention, la fraction isolée dans l'étape (B) du procédé est une fraction de queue, à savoir une fraction constituée par un mélange de composés ayant une (ou des) vitesse(s) de migration inférieure(s) à celle des composés qu'on fait migrer hors du capillaire. Dans ce cas, l'étape (B) consiste à mettre en oeuvre uniquement l'étape (B.1), sans mettre en oeuvre l'étape (B.2).

Selon ce premier mode de réalisation, la fraction isolée dans l'étape (B) est avantageusement constituée par les composés du pic de queue observable sur un électrophérogramme de l'électrophorèse de l'étape (A), à savoir un mélange des composés ayant la vitesse de migration (V_{queue}) la plus faible dans les conditions de l'électrophorèse de l'étape (A), qui sortent donc en dernier lieu sur un électrophérogramme de l'électrophorèse de l'étape (A). Dans ce cas, l'étape (B.1) consiste à faire sortir du capillaire les autres composés que les composés du pic de queue, à savoir tous les composés qui ont une vitesse de migration supérieure à V_{tête}.

Alternativement, la fraction de tête isolée dans l'étape (B) peut être constituée par les composés de deux ou plusieurs des derniers pics apparaissant sur un électrophérogramme de l'électrophorèse de l'étape (A). Le cas échéant, l'étape (B.1) consiste à faire sortir du capillaire les composés correspondant aux autres pics.

Lorsque l'étape (B) consiste à isoler une fraction de queue au sein du capillaire, la fraction de queue isolée obtenue à l'issue de l'étape (B.1) est en général localisée vers la sortie du capillaire, et il s'avère le plus souvent avantageux, notamment pour pouvoir effectuer une séparation efficace dans l'étape (C), de faire migrer les composés de la fraction vers l'entrée du capillaire.

De façon plus générale, il est souvent avantageux, préalablement à l'introduction du milieu séparateur de l'étape (C), de faire migrer la fraction isolée au sein du capillaire en direction de l'entrée du capillaire, de préférence de façon à ce que la fraction isolée se situe dans le premier dixième du capillaire, de préférence dans le premier vingtième du capillaire, et typiquement, de façon à ce que la fraction isolée se situe à un distance de l'entrée du capillaire comprise entre 0,5 et 2 cm et, de préférence, à une distance de l'ordre de 1 cm. En d'autres termes, on préfère en général que, dans le procédé de l'invention, l'étape (B') soit mise en oeuvre.

De préférence, lorsque l'étape (B') est mise en oeuvre, la migration de la fraction isolée au sein du capillaire vers l'entrée du capillaire est induite en appliquant une surpression en sortie du capillaire, en particulier lorsque l'étape (B.2) est mise en oeuvre. En fait, lorsque l'étape (B.2) et l'étape (B') sont mises en oeuvre, ces deux étapes sont en général fondues dans une seule et même étape consistant à faire migrer la fraction à isoler le plus près possible de l'entrée du capillaire (de préférence dans le premier dixième du capillaire, et avantageusement dans le premier vingtième), ce par quoi on obtient de *facto* une élimination des composés de vitesse de migration inférieure à celle de la fraction par l'entrée du capillaire.

Alternativement, selon une autre variante envisageable de l'étape (B'), adaptée en particulier lorsque l'étape (B) consiste uniquement à mettre en oeuvre l'étape (B.1), la migration de la fraction isolée au sein du capillaire vers l'entrée du capillaire peut être induite en appliquant, entre l'entrée et la sortie du capillaire, une différence de potentiel, de polarité contraire à celle de l'étape (A). Cette migration présente notamment l'avantage d'éviter toute possibilité de phénomènes d'élargissement du ou des pics de la fraction du type de ceux observés lors d'un écoulement hydrodynamique induit par l'application d'une surpression en sortie du capillaire.

Lorsque l'étape (B') est mise en oeuvre, il est indispensable que la migration de la fraction vers l'entrée du capillaire soit arrêtée avant que la fraction ne sorte du capillaire. En effet, les étapes (B) et (B') ont pour but d'isoler la fraction au sein du capillaire. Pour éviter un départ de la fraction à isoler vers le milieu extérieur, il peut être avantageux de disposer un détecteur à l'entrée du capillaire (ou proche de l'entrée du capillaire, typiquement à une distance de 1 à 10 cm de l'entrée), permettant de contrôler d'une part la sortie des différentes fractions à éliminer par l'entrée du capillaire, et d'autre part le maintien de la fraction à conserver au sein du capillaire.

De façon générale, il est en général indiqué que le capillaire possède de même un détecteur avant la sortie du capillaire, permettant de contrôler l'élimination des différentes fractions à éliminer par la sortie du capillaire et le maintien de la fraction à conserver au sein du capillaire. Dans ce cadre, la plupart des dispositifs d'électrophorèse capillaire usuels peuvent être utilisés pour conduire le procédé de l'invention. Par exemple, le procédé de l'invention peut avantageusement être mis en oeuvre dans un appareil d'électrophorèse capillaire de type 3DCE commercialisé par Agilent Technologie , ou bien un appareil de type PACE MDQ vendu par Beckman Coulter.

Par ailleurs, de façon plus générale, le capillaire mis en oeuvre dans les étapes (A) à (C) est avantageusement un capillaire de diamètre interne compris entre 5 et 100 microns. Notamment de façon à pouvoir conduire les étapes (B2) et (B') de façon optimale, ce diamètre interne est avantageusement inférieur ou égal à 50 microns, de préférence inférieur ou égal à 40 microns, et avantageusement inférieur ou égal à 30 microns, voire, dans certains cas, inférieur à 20 microns. Il est toutefois préférable que ce diamètre interne reste égal ou supérieur à 10 microns, voire à 15 microns, notamment de façon à ne pas diminuer de façon trop importante la sensibilité de la détection en sortie de capillaire.

Ainsi, à titre de capillaire avantageusement utilisable pour mettre en oeuvre le procédé de séparation selon l'invention, on peut notamment citer les capillaires de diamètre interne entre 10 et 50 microns, tels que les capillaires usuels de diamètre interne égal à 10 microns, 25 microns ou à 50 microns, les capillaires de 25 microns se révélant en particulier bien adaptés dans la plupart des cas.

Par ailleurs, notamment de façon à optimiser la qualité de la séparation des étapes (A) et (C), un capillaire utilisé pour le procédé de l'invention est de préférence un capillaire de longueur la plus faible possible, de préférence inférieure à 1 m et avantageusement inférieure à 50 cm. En général, et en particulier lorsque l'étape (B.2) est mise en oeuvre, on préfère que la longueur du capillaire reste inférieure ou égale à 40 cm, cette longueur étant avantageusement inférieure ou égale à 35 cm, notamment pour permettre d'effectuer l'étape (B.2) sans observer de phénomènes d'élargissement de pics trop prononcés. Ainsi, typiquement, la longueur d'un capillaire mis en oeuvre dans les étapes (A) à (C) du procédé de l'invention est avantageusement compris entre 20 et 60 cm, de préférence entre 20 et 40 cm (typiquement de l'ordre de 30 à 35 cm).

Comme indiqué plus haut dans la description, on peut également envisager d'utiliser des systèmes de type "microchip" à titre de capillaire pour la mise en oeuvre du procédé de l'invention. Le cas échéant, ces systèmes pourront par exemple être choisis parmi les systèmes décrits dans Microfabricated capillary electrophoresis amino acid chirality analyser for extraterrestrial exploration, Hutt, L. D., Glavin, D.P., Bada, J.L., Mathies, R.A., Anal. Chem. 1999, 71, 4000-4006 ou ceux utilisés dans les appareillages tels que ceux commercialisés sous le nom de "Agilent 2100 Bioanalyseur" par la société Agilent Technologies, ou des appareils analogues.

Ainsi qu'on l'a souligné, le procédé de l'invention permet de réaliser la séparation des constituants de nombreux mélanges. Ainsi, le procédé de l'invention peut être conduit sur tout mélange adapté à une séparation par électrophorèse. La nature du milieu séparateur introduit dans l'étape (C) peut varier en une assez large mesure en fonction de la nature exacte des constituants du mélange et des constituants de la fraction qu'on sépare dans l'étape (C). Toutefois, dans le cas le plus général, il s'agit avantageusement d'un composé neutre, par exemple un polymère neutre.

Ainsi, selon une première variante, le mélange séparé en différents constituants selon le procédé de l'invention peut être un mélange contenant des macromolécules porteuses de charge électriques, par exemple un mélange comprenant des protéines, des peptides, des acides nucléiques tels que de l'ADN ou de l'ARN, des polysaccharides, des acides humiques, des acides fluviques, ou bien encore des polymères synthétiques. Le mélange peut ainsi être par exemple un milieu biologique (contenant des macromolécules (protéines, ADN, polysaccharides ...) et des molécules de plus petite taille (peptides notamment), ou bien encore un milieu issu d'une réaction de polymérisation. Le procédé de l'invention est particulièrement adapté à la séparation d'un mélange de protéines.

Selon cette variante particulière, l'étape (A) est avantageusement une étape d'électrophorèse sans milieu séparateur ("en milieu libre"), permettant une séparation des macromolécules selon leur rapport charge/masse, le milieu séparateur MS introduit dans l'étape (C) étant alors de préférence une solution d'un polymère non chargé adaptée à une séparation des composés présent dans la fraction isolée selon leur masse. Alternativement, l'étape (A) peut avantageusement être une étape d'électrophorèse dite par focalisation isoélectrique, par exemple du type de celle décrite dans Recent advances in capillary isoelectric focusing, K. Shimura, Electrophoresis, 2002, 23, 3847-3857, consistant à séparer les constituants du mélange selon leur point isoélectrique en créant un gradient de pH au sein du capillaire. Une telle étape de séparation par focalisation isoélectrique est en particulier adaptée lorsque le milieu contient des protéines et/ou des peptides.

Les polymères utilisables dans les solutions permettant une séparation des composés de la fraction selon leur masse peuvent notamment être choisis parmi les polymères de haut poids moléculaire utilisés en électrophorèse capillaire classique pour ce type de séparation selon la masse. Ces polymères sont, en règle générale, des polymères neutres hydrosolubles, de masse moléculaire avantageusement supérieure ou égale à 10⁴ g/mole, et de préférence d'au moins 10⁵ g/mole. Lorsqu'une détection par infrarouge ou ultraviolet des constituants à séparer au sein du capillaire est mise en oeuvre, ce qui est en pratique quasiment toujours le cas, il est en outre préférable que le milieu séparateur soit transparent à la longueur d'onde utilisée pour la détection.

Pour effectuer une séparation selon la masse dans l'étape (C), on peut ainsi utiliser, à titre de milieu séparateur, une solution (généralement aqueuse) de cellulose hydroxyéthylée (hydroxyéthyl cellulose) ou une solution d'une autre cellulose modifiée adaptée (telle que l'hydroxy-propyl-cellulose ou l'hydroxy-propyl-methyl-celullose), ou bien encore une solution d'autres polymères adaptés, tels que, notamment, des solutions de dextrane, de pullulane, de polyoxyéthylène, de polyacrylamide ou de poly(alcool vinylique). Quelle que soit la nature du polymère utilisé, la concentration en polymère au sein du milieu est avantageusement au moins égale à 0,5 g/L, et le plus souvent au moins égale à 1 g/L, cette concentration étant généralement inférieure à 200 g/L, de préférence inférieure ou égale à 100 g/L. Ainsi, cette concentration peut typiquement être comprise entre 1 et 50 g/L. De façon plus générale, il est souvent avantageux que la concentration en polymère soit suffisante pour que les polymères forment au sein du milieu MS une structure enchevêtrée, notamment pour permettre une séparation selon la masse prononcée lors de l'étape (C). En particulier, le milieu utilisé peut être une solution de cellulose hydroxyéthylée (hydroxyéthyl cellulose), de masse moléculaire supérieure ou égale à 10⁵ g/mole (par exemple comprise entre 2.10⁵ et 5.10⁵ g/mole, et typiquement de l'ordre de 2,5.10⁵ g/mole), et de concentration supérieure ou égale à 0,3 g/l (par exemple comprise entre 4 et 6 g/l, et typiquement de l'ordre de 5 g/l).

Selon une deuxième variante envisageable, le mélange séparé en différents constituants selon le procédé de l'invention est un mélange de molécules chargées ayant une masse molaire inférieure à 1000 g/mole, telles que par exemple des peptides, des acides aminés, des molécules acides ou leurs sels (carboxylates, sulfonates, sulfates, phosphates...) ou basiques (notamment des amines ou leurs sels ammonium correspondant), ou bien encore des principes actifs.

Selon cette deuxième variante, l'étape (A) est avantageusement une étape d'électrophorèse sans milieu séparateur, permettant une séparation des macromolécules selon leur rapport charge/masse. Le milieu séparateur introduit dans l'étape (C) peut varier en une large mesure, est alors avantageusement :
- une solution comprenant des composés chiraux non chargés, par exemple des cyclodextrines (ou dérivés de cyclodextrine comme des cyclodextrines substituées), des éthers couronnes, des antibiotiques macrocycliques comme la vacomycine, des polysaccharides chiraux tels que les maltodextrines, ou bien encore des micelles chirales neutres (par exemple des cholates, ou des déoxycholates). Dans ce cas, on effectue dans l'étape (C) une séparation des composés présents dans la fraction isolée selon leur affinité vis-à-vis du composé chiral, ce qui conduit à une séparation des composés selon leur chiralité propre ;
- une solution d'un tensioactif, non ionique ou éventuellement zwitterionique utilisé dans les conditions de pH où il est non porteur de charge, avantageusement à une concentration supérieure à sa concentration micellaire critique, ce par quoi on effectue dans l'étape (C) une séparation des composés présents dans la fraction isolée selon leur caractère hydrophobe. A titre de tensioactifs utilisables dans ce cadre, on peut notamment citer les tensioactifs neutres à tête polyoxyéthylène (tels que ceux commercialisés sous le nom générique de "Brij") ou les tensioactifs zwitterioniques tels que le DAPS (N-dodécyl-N,N-diméthyl-3-ammonio-1-propanesulfonate).

De façon plus générale, tout milieu adapté à titre de milieu séparateur peut être introduit dans le capillaire lors de l'étape (C), à la condition qu'il soit introductible dans le capillaire par un flux électroosmotique et qu'il possède une vitesse de migration plus élevée que celle de la fraction. A cet effet, de façon générale le milieu séparateur introduit lors de l'étape (C) comprend avantageusement un ou plusieurs composés non chargés.

Comme on l'a souligné, le procédé de séparation de la présente invention est un procédé à la fois simple et efficace à mettre en oeuvre, qui permet le plus souvent d'obtenir une séparation particulièrement résolutive de constituants du mélange.

Le procédé de l'invention présente en outre l'intérêt d'être conduit au sein d'un unique capillaire, ce qui permet de récupérer les composés séparés à la sortie dudit capillaire comme dans le cas d'une électrophorèse capillaire classique. Cette caractéristique permet notamment d'envisager l'analyse des constituants séparés obtenus à l'issu de l'étape (C). Pour ce faire, suite à la séparation de l'étape (C), les composés sous forme séparée sont injectés du capillaire vers un dispositif d'analyse, tel qu'un spectromètre de masse (quadrupôle, trappe d'ions, temps de vol), ou bien encore un détecteur conductimétrique ou électrochimique (injection en ligne du capillaire vers un autre dispositif d'analyse). Cette utilisation particulière du procédé constitue un autre objet spécifique de la présente invention.

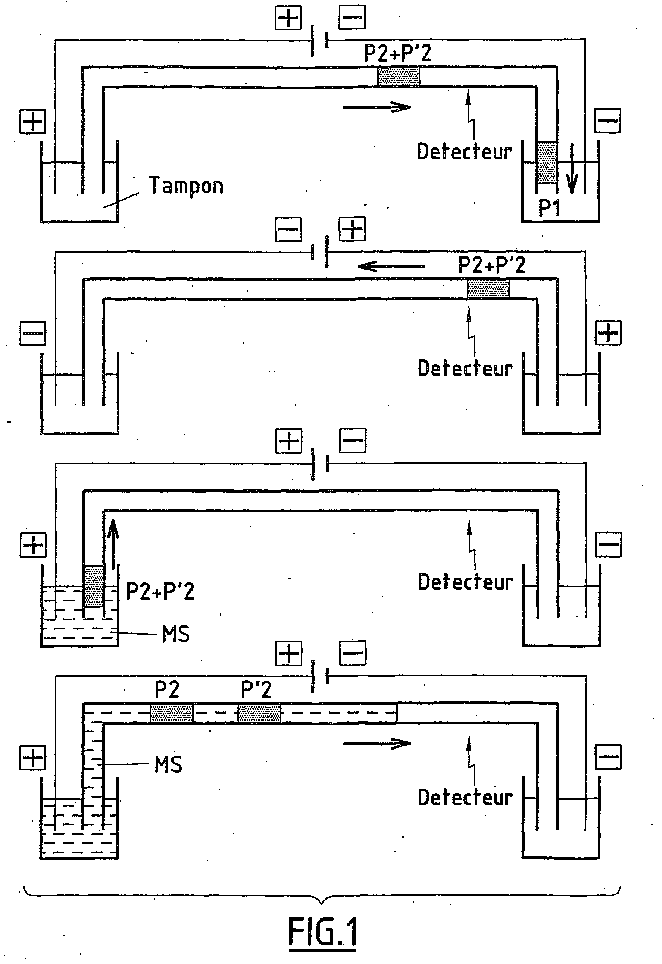

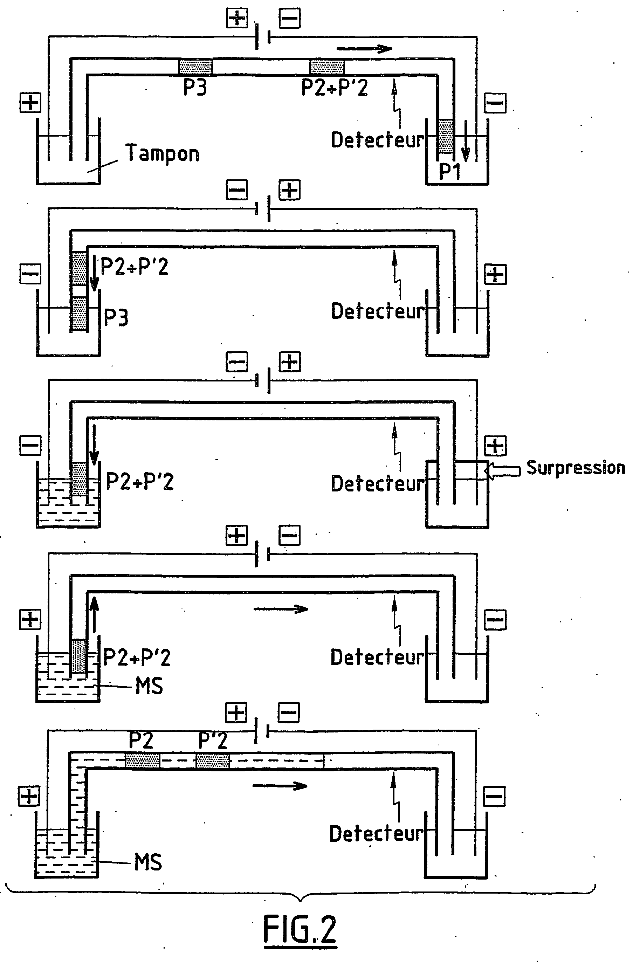

Différents aspects et avantages du procédé apparaîtront de façon encore plus explicite au vu des exemples donnés ci-après, et au vu des figures annexées dans lesquelles :
- La Figue 1 est un schéma illustratif de la séparation effectuée dans l'exemple 1
- La Figure 2 est un schéma illustrant la séparation opérée dans l'exemple 2.

### EXEMPLE 1 : Séparation bidimensionnelle dans un seul capillaire d'un mélange de trois polymères anioniques (polyélectrolytes anioniques).

Dans cet exemple, on a utilisé un capillaire en silice vierge, de diamètre interne de 50 microns et de longueur égale à 30 cm. Pour suivre l'évolution des séparation au sein du capillaire, on a placé un détecteur à 20 cm de l'entrée du capillaire.

Selon le procédé de l'invention, on a effectué la séparation d'un mélange des trois polymères suivants :
- polymère P1 : copolymère statistique d'acrylamide (90% en masse) et de 2-acrylamido-2-méthyl-propane-sulfonate (10% en masse) ayant un taux de charge de 10% et une masse molaire de 2.10⁵ g/mole ;
- polymère P2 : polystyrène sulfonate (taux de charge 100%) de masse molaire égale à 3,33.10⁵ g/mole (indice de polymolécularité inférieur à 1,2)
- polymère P'2 : polystyrène sulfonate (taux de charge 100%) de masse molaire égale à 1,45.10⁵ g/mole (indice de polymolécularité inférieur à 1,2).

Le mélange testé des polymères P1, P2 et P'2 est une solution aqueuse des polymères, avec une concentration en polymère P1 de 5 g/l, une concentration en polymère P2 de 0,5 g/l, et une concentration en polymère P'2 de 0,5 g/l.

### 1.1 : Séparation électrophorétique des polymères selon leur taux de charge (première dimension de la séparation)

Le polymère P1, d'une part, et les polymères P2 et P'2, d'autre part, présentent des taux de charge différents qui permettent leur séparation par électrophorèse en milieu libre.

Pour ce faire, on a rempli le capillaire par un tampon de séparation (tampon borate 80 mM, de pH 9,2), injecté sous pression dans le capillaire. Le capillaire a été purgé pendant 5 minutes par le tampon borate.

On a ensuite injecté dans le capillaire, hydrodynamiquement (sous une pression de 0,3 psi pendant 3 secondes), 4 nL (nanolitre) de la solution des polymères P1, P2 et P'2.

On a ensuite appliqué, entre l'entrée et la sortie du capillaire, plongées dans des solutions tampons borate, une différence de potentiel de +20 kV, de façon à séparer les polymères selon leur taux de charge, par électrophorèse.

Dans les conditions de l'électrophorèse effectuée, la surface de silice du capillaire est chargée négativement, ce qui induit un flux électroosmotique cationique dirigé de l'entrée vers la sortie du capillaire. Les polymères anioniques migrent par conséquent à contre-flux électroosmotique. Par conséquent, le polymère le moins chargé, à savoir le polymère P1, possède une vitesse de migration supérieure à celle des deux autres polyélectrolytes P2 et P'2.

On a observé, au niveau du détecteur, l'apparition d'un premier pic (pic de tête) correspondant au polymère P1, suivi par un second pic (pic de queue) correspondant au mélange des polymères P2 et P'2.

### 1.2 : Elimination du polymère P1 (pic de tête)

On a maintenu la différence de potentiel de +20 kV appliquée dans l'étape 1.1, de façon à laisser sortir du capillaire le polymère P1 (pic de tête) et à ne conserver dans le capillaire les polyélectrolytes P2 et P'2 (pic de queue).

Pour procéder à cette élimination, on a mesuré le temps T (de l'ordre d'un peu moins de 13 minutes) mis par le polymère P1 pour parcourir les 20 premiers centimètres du capillaire (de l'entrée au détecteur) et, à compter du moment où le polymère P1 a été détecté, on l'a laissé migrer pendant le temps T/2 (nécessaire pour parcourir les 10 centimètres restant), plus quelques dizaines de secondes pour s'assurer que tout le polymère P1 a quitté le capillaire. En pratique, on a laissé la migration s'effectuer pendant 1,7 minutes.

En bilan, au cours des étapes 1.1 et 1.2, on a donc maintenu la différence de potentiel de +20 kV entre l'entrée et la sortie du capillaire durant 3 minutes.

### 1.3 : Migration des polymères P2 et P'2 isolés (pic de queue) vers l'entrée du capillaire

On a inversé la polarité entre l'entrée et la sortie du capillaire (différence de potentiel imposée de -20 kV), ce par quoi on a inversé le sens de migration des composés. Les polymères P2 et P'2 isolés dans le capillaire ont alors migré vers l'entrée du capillaire. On a observé au niveau du détecteur le retour de ces polymères, toujours sous la forme d'un pic unique et on a vérifié la disparition du pic correspondant au polymère P1.

On a maintenu la différence de potentiel de -20 kV pendant la durée totale de migration à +20 kV effectuée dans les étapes 1.1 et 1.2, minorée de quelques secondes, de façon à s'assurer de ne pas faire sortir les composés P2 et P'2 par l'entrée du capillaire. La différence de potentiel de -20 kV a ainsi été maintenue pendant 2 minutes et 45 secondes.

### 1.4 : Introduction d'un milieu séparateur et séparation des polymères P2 et P'2 dans le capillaire (seconde dimension de la séparation).

On a plongé l'entrée du capillaire dans une solution constituée par un tampon borate 80 mM/L de pH égal à 9,2 et comprenant 5 g/L d'hydroxyéthylcellulose de masse molaire égale à 2,5.10⁵ g/mole.

On a appliqué une différence de potentiel de +6 kV entre l'entrée du capillaire plongée dans la solution d'hydroxyéthylcellulose, et la sortie plongée dans un tampon borate (solution aqueuse 80 mM de pH 9,2, sans polymère).

On a ainsi créé un flux électroosmotique entraînant l'hydroxyéthylcellulose dans le capillaire avec une vitesse apparente supérieure à celle des polyélectrolytes P2 et P'2. L'hydroxyéthylcellulose a ainsi rattrapé les polymères P2 et P'2 au sein du capillaire, et on a obtenu une séparation des polymères P2 et P'2 selon leur taille.

On a observé au niveau du détecteur une séparation des polymères P2 et P'2 selon leur masse molaire dans les nouvelles conditions de l'électrophorèse.

### EXEMPLE 2 : Séparation bidimensionnelle dans un seul capillaire d'un mélange de quatre composés anioniques (3 polymères anioniques et une molécule anionique de plus faible taille).

Dans cet exemple, on a utilisé un capillaire en silice vierge, de diamètre interne de 25 microns et de longueur égale à 30 cm. Pour suivre l'évolution des séparation au sein du capillaire, on a placé un détecteur à 20 cm de l'entrée du capillaire, comme dans l'exemple 1.

Selon le procédé de l'invention, on a effectué la séparation d'un mélange des quatre composés suivants :
- le polymère P1 de l'exemple 1 ;
- le polymère P2 de l'exemple 1 ;
- le polymère P'2 de l'exemple 1; et
- un composé P3 : l'acide orthophtalique, ionisé sous forme d'anions orthophtalate (dans les conditions de la séparation, le pH est de 9,2).

Le mélange testé des composés P1, P2, P'2 et P3 est une solution aqueuses de ces composés, avec une concentration en polymère P1 de 5 g/l, une concentration en polymère P2 de 0,5 g/l, une concentration en polymère P'2 de 0,5 g/l, et une concentration en composé P3 de 0,5 g/l.

### 2.1 : Séparation électrophorétique des composés du mélange (première dimension de la séparation).

On a rempli le capillaire par un tampon de séparation (tampon borate 90 mM, de pH 9,2), injecté sous pression dans le capillaire. Le capillaire a été purgé pendant 5 minutes par le tampon borate.

On a ensuite injecté dans le capillaire, hydrodynamiquement (sous une pression de 0,3 psi pendant 12 secondes), 4 nL (nanolitres) de la solution des polymères P1, P2, P'2 et P3.

On a ensuite appliqué, entre l'entrée et la sortie du capillaire, plongées dans des solutions tampons, une différence de potentiel de +20 kV, de façon à séparer les composés par électrophorèse.

Dans les conditions de l'électrophorèse effectuée, on a observé, au niveau du détecteur, l'apparition d'un premier pic (pic de tête) correspondant au polymère P1, suivi par un second pic (pic de coeur) correspondant au mélange des polymères P2 et P'2, puis un dernier pic (pic de queue) correspondant au composé P3.

### 2.2: Elimination du polymère P1 (pic de tête)

On a maintenu la différence de potentiel de +20 kV appliquée dans l'étape 2.1, de façon à laisser sortir du capillaire le polymère P1 (pic de tête) et à ne conserver dans le capillaire les polyélectrolytes P2 et P'2 (pic de coeur) et le composé P3 (pic de queue).

Pour procéder à cette élimination, comme dans l'exemple 1, on a mesuré le temps T mis par le polymère P1 pour parcourir les 20 premiers centimètres du capillaire (de l'entrée au détecteur) et, à compter du moment où le polymère P1 a été détecté, on l'a laissé migrer pendant un temps T/2, plus quelques dizaines de secondes pour s'assurer que tout le polymère P1 a quitté le capillaire.

En bilan, au cours des étapes 2.1 et 2.2, on a maintenu la différence de potentiel de +20 kV entre l'entrée et la sortie du capillaire pendant 4,7 minutes.

### 2.3 : Elimination du composé P3 (pic de queue) et migration des polymères P2 et P'2 (pic de coeur) vers l'entrée du capillaire

On a inversé la polarité entre l'entrée et la sortie du capillaire (différence de potentiel imposée de -20 kV), ce par quoi on a inversé le sens de migration des composés. On a appliqué cette différence de potentiel durant 3 minutes.

On a observé au niveau du détecteur le retour des polymères P2 et P'2, toujours sous la forme d'un pic unique, et du pic de queue correspondant au composé P3. On a vérifié la disparition du pic correspondant au polymère P1.

On a ensuite continué à appliquer cette différence de potentiel de -20 kV pendant 1,4 minutes tout en appliquant une surpression de 0,3 psi en sortie du capillaire.

Ces étapes permettent d'évacuer le composé P3 hors du capillaire (par l'entrée) et de faire migrer les polymères P2 et P'2 vers l'entrée du capillaire, sans les en faire sortir.

### 2.4 : Introduction d'un milieu séparateur et séparation des polymères P2 et P'2 dans le capillaire (seconde dimension de la séparation).

On a plongé l'entrée du capillaire contenant les polymères P2 et P'2 isolés précédemment dans un tampon borate 90 mM/L de pH 9,2, contenant 5 g/L d'hydroxyéthylcellulose de masse molaire égale à 2,5.10⁵ g/mole.

On a appliqué une différence de potentiel de +6 kV entre l'entrée du capillaire plongée dans la solution d'hydroxyéthylcellulose, et la sortie plongée dans un tampon borate (solution aqueuse 80 mM de pH 9,2, sans polymère).

On a ainsi créé un flux électroosmotique entraînant l'hydroxyéthylcellulose dans le capillaire avec une vitesse apparente supérieure à celle des polyélectrolytes P2 et P'2 (migration des polyélectrolytes en mode contre-électroosmotique). L'hydroxyéthylcellulose a ainsi rattrapé les polymères P2 et P'2 au sein du capillaire, et on a obtenu une séparation des polymères P2 et P'2 selon leur taille.

On a observé au niveau du détecteur une séparation des polymères P2 et P'2 selon leur masse molaire dans les nouvelles conditions de l'électrophorèse.

## Revendications

1. Procédé de séparation des constituants d'un mélange (P1+P2+P'2; P1+P2+P'2+P3) comprenant des composés électriquement chargés, par électrophorèse capillaire au sein d'un unique capillaire, ledit procédé comprenant les étapes consistant à :
(A) selon la technique de l'électrophorèse capillaire, introduire et faire migrer les composés du mélange (P1+P2+P'2; P1+P2+P'2+P3) au sein du capillaire, de façon à réaliser une séparation des composés du mélange (P1+P2+P'2; P1+P2+P'2+P3) au sein du capillaire, selon leur vitesse de migration dans les conditions de l'étape (A) ;
(B) isoler dans le capillaire une fraction (P2+P'2) des composés séparés dans l'étape (A), en mettant en oeuvre au moins l'une des étapes suivantes :
(B.1) évacuer hors du capillaire une partie (P1) des composés ayant les vitesses de migration les plus élevées dans les conditions de l'électrophorèse de l'étape (A), en laissant migrer ces composés en sortie du capillaire; et/ou
(B.2) évacuer hors du capillaire une partie (P3) des composés ayant les vitesses de migration les plus faibles dans les conditions de l'électrophorèse de l'étape (A), en faisant migrer ces composés vers l'entrée du capillaire ; et
(C) sous l'effet d'une différence de potentiel appliquée entre l'entrée et la sortie du capillaire, introduire, dans le capillaire contenant la fraction (P2+P'2) isolée, un milieu séparateur (MS) ayant une vitesse de migration supérieure à celle des composés de la fraction (P2+P'2), de façon que ledit milieu séparateur rattrape ladite fraction (P2+P'2) au sein du capillaire, et modifie les conditions d'électrophorèse de cette fraction, et maintenir la différence de potentiel jusqu'à obtenir une séparation des composés compris dans la fraction (P2+P'2) en fonction de leur vitesse de migration dans les nouvelles conditions d'électrophorèse obtenues.

2. Procédé selon la revendication 1, dans lequel l'étape (B) consiste à mettre en oeuvre l'étape (B.2) sans mettre en oeuvre l'étape (B.1), la fraction isolée au sein du capillaire étant alors une fraction de tête.

3. Procédé selon la revendication 2, où la fraction de tête est constituée par les composés du pic de tête observable sur un électrophérogramme de l'électrophorèse de l'étape (A).

4. Procédé selon l'une des revendications 2 ou 3, **caractérisé en ce que** l'étape (B.2) consiste à appliquer une surpression en sortie du capillaire, jusqu'à faire sortir par l'entrée du capillaire les composés ne faisant pas partie de la fraction de tête à isoler.

5. Procédé selon l'une des revendications 2 ou 3, **caractérisé en ce que** l'étape (B.2) consiste à :
(i) appliquer, entre l'entrée et la sortie du capillaire, une différence de potentiel, de polarité contraire à celle de l'étape (A), en prenant soin de ne pas recombiner la fraction à isoler avec les autres composés séparés du mélange ; puis
(ii) appliquer une surpression en sortie du capillaire jusqu'à faire sortir par l'entrée du capillaire les composés ne faisant pas partie de la fraction de tête à isoler.

6. Procédé selon la revendication 1, dans lequel l'étape (B) consiste à mettre en oeuvre l'étape (B.1) pour évacuer une fraction de tête, puis l'étape (B.2) pour évacuer une fraction de queue, la fraction isolée au sein du capillaire étant alors une fraction de coeur.

7. Procédé selon la revendication 6, où la fraction de coeur est constituée par les composés d'un des pics compris entre le pic de queue et le pic de tête observables sur un électrophérogramme de l'électrophorèse de l'étape (A).

8. Procédé selon l'une des revendications 6 ou 7, **caractérisé en ce que** l'étape (B.2) consiste à appliquer une surpression en sortie du capillaire, jusqu'à faire sortir par l'entrée du capillaire les composés ne faisant pas partie de la fraction de tête à isoler.

9. Procédé selon l'une des revendications 6 ou 7, **caractérisé en ce que** l'étape (B.2) consiste à :
(i) appliquer, entre l'entrée et la sortie du capillaire, une différence de potentiel, de polarité contraire à celle de l'étape (A), en prenant soin de ne pas recombiner la fraction à isoler avec les autres composés séparés du mélange ; puis
(ii) appliquer une surpression en sortie du capillaire jusqu'à faire sortir par l'entrée du capillaire les composés ne faisant pas partie de la fraction de tête à isoler.

10. Procédé selon la revendication 1, dans lequel l'étape (B) consiste à mettre en oeuvre l'étape (B.1) sans mettre en oeuvre l'étape (B.2), la fraction isolée au sein du capillaire étant alors une fraction de queue.

11. Procédé selon la revendication 10, où la fraction de queue est constituée par les composés du pic de queue observable sur un électrophérogramme de l'électrophorèse de l'étape (A).

12. Procédé selon l'une quelconque des revendications 1 à 11, **caractérisé en ce que,** préalablement à l'introduction du milieu séparateur de l'étape (C), on fait migrer la fraction isolée au sein du capillaire vers l'entrée du capillaire.

13. Procédé selon la revendication 12, **caractérisé en ce que** la migration de la fraction isolée au sein du capillaire vers l'entrée du capillaire est induite en appliquant une surpression en sortie du capillaire.

14. Procédé selon la revendication 12, **caractérisé en ce que** la migration de la fraction isolée au sein du capillaire vers l'entrée du capillaire est induite en appliquant, entre l'entrée et la sortie du capillaire, une différence de potentiel, de polarité contraire à celle de l'étape (A).

15. Procédé selon l'une quelconque des revendications 1 à 14, **caractérisé en ce que** le capillaire mis en oeuvre dans les étapes (A) à (C) est un capillaire de diamètre interne compris entre 5 et 100 microns.

16. Procédé selon l'une quelconque des revendications 1 à 15, **caractérisé en ce que** le capillaire mis en oeuvre dans les étapes (A) à (C) est un capillaire de longueur inférieure à 1 m.

17. Procédé selon l'une quelconque des revendications 1 à 16, où le mélange est un mélange contenant des macromolécules porteuses de charge électriques.

18. Procédé selon la revendication 17, **caractérisé en ce que** le mélange comprend des protéines, des peptides, des acides nucléiques, des polysaccharides, des acides humiques, des acides fluviques ou des polymères synthétiques.

19. Procédé selon la revendication 18, **caractérisé en ce que** le mélange est un mélange de protéines.

20. Procédé selon l'une des revendications 17 ou 18, **caractérisé en ce que** l'étape (A) est une étape d'électrophorèse sans milieu séparateur, dite "milieu libre", permettant une séparation des macromolécules selon le rapport charge/ masse, et **en ce que** le milieu séparateur introduit dans l'étape (C) est une solution d'un polymère non chargé adapté à une séparation des composés présent dans la fraction isolée selon leur masse.

21. Procédé selon la revendication 20, **caractérisé en ce que** le milieu séparateur introduit dans l'étape (C) est une solution de cellulose hydroxyéthylée, d'une hydroxypropylcellulose, de dextrane, de pullulane, de polyoxyéthylène, de polyacrylamide ou de poly(alcool vinylique).

22. Procédé selon l'une quelconque des revendications 1 à 16, où le mélange est un mélange de molécules chargées ayant une masse molaire inférieure à 1000 g/mole.

23. Procédé selon la revendication 22, **caractérisé en ce que** l'étape (A) est une étape d'électrophorèse sans milieu séparateur, permettant une séparation des macromolécules selon leur rapport charge/masse, et **en ce que** le milieu séparateur introduit dans l'étape (C) est une solution d'un composé chiral non chargé, ce par quoi on effectue dans l'étape (C) une séparation des composés présents dans la fraction isolée selon leur affinité vis-à-vis du composé chiral.

24. Procédé selon la revendication 22, **caractérisé en ce que** l'étape (A) est une étape d'électrophorèse sans milieu séparateur, permettant une séparation des macromolécules selon leur rapport charge/masse, et **en ce que** le milieu séparateur introduit dans l'étape (C) est une solution d'un tensioactif, ce par quoi on effectue dans l'étape (C) une séparation des composés présents dans la fraction isolée selon leur caractère hydrophobe.

25. Utilisation d'un procédé selon l'une quelconque des revendications 1 à 24, pour l'analyse des constituants séparés à l'issue de l'étape (C), les composés séparés étant injectés du capillaire vers un dispositif d'analyse.

## Claims

1. Process for separating the constituents of a mixture (P1+P2+P'2; P1+P2+P'2+P3) comprising electrically charged compounds, by capillary electrophoresis in a single capillary, the process comprising the steps consisting in:
(A) introducing the compounds of the mixture (P1+P2+P'2; P1+P2+P'2+P3) into the capillary and causing them to migrate therein in accordance with the capillary electrophoresis technique in order to produce a separation of the compounds of the mixture (P1+P2+P'2; P1+P2+P'2+P3) in the capillary in accordance with their migration rate under the conditions of step (A) ;
(B) isolating in the capillary a fraction (P2+P'2) of the compounds separated in step (A), by implementing at least one of the following steps:
(B.1) evacuating from the capillary a portion (P1) of the compounds having the highest migration rates under the electrophoresis conditions of step (A), by allowing those compounds to migrate at the outlet of the capillary; and/or
(B.2) evacuating from the capillary a portion (P3) of the compounds having the lowest migration rates under the electrophoresis conditions of step (A), by causing those compounds to migrate towards the inlet of the capillary; and
(C) under the effect of a difference in potential applied between the inlet and the outlet of the capillary, introducing into the capillary containing the isolated fraction (P2+P'2) a separating medium (SM) having a migration rate higher than that of the compounds of the fraction (P2+P'2) so that the separating medium catches up with the fraction (P2+P'2) in the capillary, and modifies the electrophoresis conditions for that fraction, and maintaining the difference in potential until a separation of the compounds included in the fraction (P2+P'2) is produced in accordance with their migration rate under the new electrophoresis conditions obtained.

2. Process according to claim 1, wherein step (B) consists in implementing step (B.2) without implementing step (B.1), the fraction isolated in the capillary then being a head fraction.

3. Process according to claim 2, wherein the head fraction comprises the compounds of the head peak observable on an electropherogram of the electrophoresis of step (A).

4. Process according to either claim 2 or claim 3, **characterised in that** step (B.2) consists in applying an overpressure at the outlet of the capillary until the compounds that do not form part of the head fraction to be isolated are caused to leave via the inlet of the capillary.

5. Process according to either claim 2 or claim 3, **characterised in that** step (B.2) consists in:
(i) applying, between the inlet and the outlet of the capillary, a difference in potential of opposite polarity to that of step (A), taking care not to recombine the fraction to be isolated with the other compounds separated from the mixture; then
(ii) applying an overpressure at the outlet of the capillary until the compounds that do not form part of the head fraction to be isolated are caused to leave via the inlet of the capillary.

6. Process according to claim 1, wherein step (B) consists in implementing step (B.1) in order to evacuate a head fraction, then step (B.2) in order to evacuate a tail fraction, the fraction isolated in the capillary then being a core fraction.

7. Process according to claim 6, wherein the core fraction comprises the compounds of one of the peaks between the tail peak and the head peak which are observable on an electropherogram of the electrophoresis of step (A).

8. Process according to either claim 6 or claim 7, **characterised in that** step (B.2) consists in applying an overpressure at the outlet of the capillary until the compounds that do not form part of the head fraction to be isolated are caused to leave via the inlet of the capillary.

9. Process according to either claim 6 or claim 7, **characterised in that** step (B.2) consists in:
(i) applying, between the inlet and the outlet of the capillary, a difference in potential of opposite polarity to that of step (A), taking care not to recombine the fraction to be isolated with the other compounds separated from the mixture; then
(ii) applying an overpressure at the outlet of the capillary until the compounds that do not form part of the head fraction to be isolated are caused to leave via the inlet of the capillary.

10. Process according to claim 1, wherein step (B) consists in implementing step (B.1) without implementing step (B.2), the fraction isolated in the capillary then being a tail fraction.

11. Process according to claim 10, wherein the tail fraction comprises the compounds of the tail peak observable on an electropherogram of the electrophoresis of step (A).

12. Process according to any one of claims 1 to 11, **characterised in that,** before the introduction of the separating medium of step (C), the fraction isolated in the capillary is caused to migrate towards the inlet of the capillary.

13. Process according to claim 12, **characterised in that** the migration of the fraction isolated in the capillary towards the inlet of the capillary is induced by applying an overpressure at the outlet of the capillary.

14. Process according to claim 12, **characterised in that** the migration of the fraction isolated in the capillary towards the inlet of the capillary is induced by applying, between the inlet and the outlet of the capillary, a difference in potential of opposite polarity to that of step (A).

15. Process according to any one of claims 1 to 14, **characterised in that** the capillary used in steps (A) to (C) is a capillary having an inside diameter of from 5 to 100 microns.

16. Process according to any one of claims 1 to 15, **characterised in that** the capillary used in steps (A) to (C) is a capillary having a length of less than 1 m.

17. Process according to any one of claims 1 to 16, wherein the mixture is a mixture containing macromolecules carrying electrical charges.

18. Process according to claim 17, **characterised in that** the mixture comprises proteins, peptides, nucleic acids, polysaccharides, humic acids, fluvic acids or synthetic polymers.

19. Process according to claim 18, **characterised in that** the mixture is a mixture of proteins.

20. Process according to either claim 17 or claim 18, **characterised in that** step (A) is an electrophoresis step without a separating medium, referred to as a "free medium" step, permitting separation of the macromolecules in accordance with the charge/mass ratio, and **in that** the separating medium introduced in step (C) is a solution of a non-charged polymer suitable for separating the compounds present in the isolated fraction in accordance with their mass.

21. Process according to claim 20, **characterised in that** the separating medium introduced in step (C) is a solution of hydroxyethylated cellulose, of a hydroxypropylcellulose, of dextran, of pullulan, of polyoxyethylene, of polyacrylamide or of poly(vinyl alcohol).

22. Process according to any one of claims 1 to 16, wherein the mixture is a mixture of charged molecules having a molar mass of less than 1000 g/mole.

23. Process according to claim 22, **characterised in that** step (A) is an electrophoresis step without a separating medium, permitting separation of the macromolecules in accordance with their charge/mass ratio, and **in that** the separating medium introduced in step (C) is a solution of a non-charged chiral compound, by means of which a separation of the compounds present in the isolated fraction is effected in step (C) in accordance with their affinity with respect to the chiral compound.

24. Process according to claim 22, **characterised in that** step (A) is an electrophoresis step without a separating medium, permitting separation of the macromolecules in accordance with their charge/mass ratio, and **in that** the separating medium introduced in step (C) is a solution of a surfactant, by means of which a separation of the compounds present in the isolated fraction is effected in step (C) in accordance with their hydrophobic character.

25. Use of a process according to any one of claims 1 to 24, for the analysis of the constituents that have been separated at the end of step (C), the separated compounds being injected from the capillary to an analysis device.

## Patentansprüche

1. Verfahren zum Trennen der Komponenten eines Gemischs (P1 + P2 + P'2; P1 + P2 + P'2 + P3), das elektrisch geladene Verbindungen aufweist, mittels Kapillarelektrophorese in einer einzigen Kapillare, wobei das Verfahren die folgenden Schritte aufweist:
(A) gemäß der Technik der Kapillarelektrophorese Einführen und Wandern-Lassen der Verbindungen des Gemischs (P1 + P2 + P'2; P1 + P2 + P'2 + P3) in der Kapillare, so dass eine Trennung der Verbindungen des Gemischs (P1 + P2 + P'2; P1 + P2 + P'2 + P3) in der Kapillare entsprechend ihrer Wanderungsgeschwindigkeit unter den Bedingungen des Schrittes (A) realisiert wird,
(B) Isolieren einer Fraktion (P2 + P'2) der in Schritt (A) getrennten Verbindungen in der Kapillare mittels der Durchführung von mindestens einem der folgenden Schritte:
(B.1) Ableiten von einem Teil (P1) der Verbindungen mit den größten Wanderungsgeschwindigkeiten unter den Bedingungen der Elektrophorese des Schrittes (A) aus der Kapillare durch Wandern-Lassen der Verbindungen am Ausgang der Kapillare, und / oder
(B.2) Ableiten von einem Teil (P3) der Verbindungen mit den geringsten Wanderungsgeschwindigkeiten unter den Bedingungen der Elektrophorese des Schrittes (A) aus der Kapillare durch Wandern-Lassen der Verbindungen in Richtung zu dem Eingang der Kapillare; und
(C) unter der Einwirkung einer Potentialdifferenz, die zwischen dem Eingang und dem Ausgang der Kapillare angelegt wird, Einführen in die Kapillare, die die isolierte Fraktion (P2 + P'2) enthält, eines Trennmediums (MS) mit einer Wanderungsgeschwindigkeit, die größer als die der Verbindungen der Fraktion (P2 + P'2) ist, so dass das Trennmedium die Fraktion (P2 + P'2) in der Kapillare einholt und die Elektrophorese-Bedingungen der Fraktion modifiziert, und Beibehalten der Potentialdifferenz bis zum Erhalten einer Trennung der in der Fraktion (P2 + P'2) enthaltenen Verbindungen in Abhängigkeit von ihrer Wanderungsgeschwindigkeit unter den neuen erhaltenen Elektrophorese-Bedingungen.

2. Verfahren gemäß Anspruch 1, wobei Schritt (B) aus dem Durchführen des Schrittes (B.2) besteht, ohne dabei den Schritt (B.1) durchzuführen, wobei dann die isolierte Fraktion in der Kapillare eine Kopffraktion ist.

3. Verfahren gemäß Anspruch 2, wobei die Kopffraktion aus den Verbindungen des Kopfpeaks gebildet ist, der auf einem Elektropherogramm der Elektrophorese des Schrittes (A) zu beobachten ist.

4. Verfahren gemäß einem der Ansprüche 2 oder 3, **dadurch gekennzeichnet, dass** der Schritt (B.2) aus dem Anlegen eines Überdrucks am Ausgang der Kapillare besteht, bis bewirkt wird, dass die Verbindungen, die nicht Teil der zu isolierenden Kopffraktion sind durch den Eingang der Kapillare austreten.

5. Verfahren gemäß einem der Ansprüche 2 oder 3, **dadurch gekennzeichnet, dass** der Schritt (B.2) folgendes aufweist:
(i) Anlegen zwischen dem Eingang und dem Ausgang der Kapillare einer Potentialdifferenz mit einer Polarität, die zu der des Schrittes (A) entgegengesetzt ist, wobei darauf geachtet wird, dass die zu isolierende Fraktion nicht mit den anderen getrennten Verbindungen des Gemischs neu kombiniert wird, und anschließend
(ii) Anlegen eines Überdrucks am Ausgang der Kapillare, bis bewirkt wird, dass die Verbindungen, die nicht Teil der zu isolierenden Kopffraktion sind, durch den Eingang der Kapillare austreten.

6. Verfahren gemäß Anspruch 1, wobei der Schritt (B) aus der Durchführung des Schrittes (B.1) zum Ableiten einer Kopffraktion und dann des Schrittes (B.2) zum Ableiten einer Endfraktion besteht, wobei die isolierte Fraktion in der Kapillare dann eine Kernfraktion ist.

7. Verfahren gemäß Anspruch 6, wobei die Kernfraktion aus den Verbindungen von einem der Peaks zwischen dem Endpeak und dem Kopfpeak gebildet ist, die auf einem Elektropherogramm der Elektrophorese des Schrittes (A) zu beobachten sind.

8. Verfahren gemäß einem der Ansprüche 6 oder 7, **dadurch gekennzeichnet, dass** der Schritt (B.2) aus dem Anlegen eines Überdrucks an dem Ausgang der Kapillare besteht, bis bewirkt wird, dass die Verbindungen, die nicht Teil der zu isolierenden Kopffraktion sind, durch den Eingang der Kapillare austreten.

9. Verfahren gemäß einem der Ansprüche 6 oder 7, **dadurch gekennzeichnet, dass** der Schritt (B.2) Folgendes aufweist:
(i) Anlegen zwischen dem Eingang und dem Ausgang der Kapillare einer Potentialdifferenz, deren Polarität zu der des Schrittes (A) entgegengesetzt ist, wobei darauf geachtet wird, dass die zu isolierende Fraktion nicht mit den anderen von dem Gemisch getrennten Verbindungen neu kombiniert wird, und anschließend
(ii) Anlegen eines Überdrucks am Ausgang der Kapillare, bis bewirkt wird, dass die Verbindungen, die nicht Teil der zu isolierenden Kopffraktion sind, durch den Eingang der Kapillare austreten.

10. Verfahren gemäß Anspruch 1, wobei der Schritt (B) aus dem Durchführen des Schrittes (B.1) besteht, ohne dabei den Schritt (B.2) durchzuführen, wobei die isolierte Fraktion in der Kapillare dann eine Endfraktion ist.

11. Verfahren gemäß Anspruch 10, wobei die Endfraktion aus den Verbindungen des Endpeaks gebildet ist, der auf einem Elektropherogramm der Elektrophorese des Schrittes (A) zu beobachten ist.

12. Verfahren gemäß einem der Ansprüche 1 bis 11, **dadurch gekennzeichnet, dass** vor dem Einführen des Trennmediums des Schrittes (C) bewirkt wird, dass die isolierte Fraktion in der Kapillare in Richtung zu dem Eingang der Kapillare wandert.

13. Verfahren gemäß Anspruch 12, **dadurch gekennzeichnet, dass** das Wandern der isolierten Fraktion in der Kapillare in Richtung zu dem Eingang der Kapillare durch Anlegen eines Überdrucks am Ausgang der Kapillare bewirkt wird.

14. Verfahren gemäß Anspruch 12, **dadurch gekennzeichnet, dass** das Wandern der isolierten Fraktion in der Kapillare in Richtung zu dem Eingang der Kapillare durch Anlegen einer Potentialdifferenz zwischen dem Eingang und dem Ausgang der Kapillare, deren Polarität zu der des Schrittes (A) entgegengesetzt ist, bewirkt wird.

15. Verfahren gemäß einem der Ansprüche 1 bis 14, **dadurch gekennzeichnet, dass** die in den Schritten (A) bis (C) verwendete Kapillare eine Kapillare mit einem Innendurchmesser von zwischen 5 Mikrometer und 100 Mikrometer ist.

16. Verfahren gemäß einem der Ansprüche 1 bis 15, **dadurch gekennzeichnet, dass** die in den Schritten (A) bis (C) verwendete Kapillare eine Kapillare mit einer Länge von weniger als 1 m ist.

17. Verfahren gemäß einem der Ansprüche 1 bis 16, wobei das Gemisch ein Gemisch ist, das Makromoleküle enthält, die Träger elektrischer Ladungen sind.

18. Verfahren gemäß Anspruch 17, **dadurch gekennzeichnet, dass** das Gemisch Proteine, Peptide, Nukleinsäuren, Polysacharide, Huminsäuren, Fulvinsäuren oder synthetische Polymere aufweist.

19. Verfahren gemäß Anspruch 18, **dadurch gekennzeichnet, dass** das Gemisch ein Proteingemisch ist.

20. Verfahren gemäß einem der Ansprüche 17 oder 18, **dadurch gekennzeichnet, dass** der Schritt (A) ein Schritt der Elektrophorese ohne Trennmedium ist, wobei dies als "freies Medium" bezeichnet wird, wodurch eine Trennung der Makromoleküle entsprechend dem Verhältnis Ladung zu Masse ermöglicht wird, und dadurch, dass das Trennmedium, das in dem Schritt (C) eingeführt wird, eine Lösung aus einem nicht geladenen Polymer ist, die an eine Trennung der in der isolierten Fraktion vorhandenen Verbindungen entsprechend ihrer Masse angepasst ist.

21. Verfahren gemäß Anspruch 20, **dadurch gekennzeichnet, dass** das Trennmedium, das in dem Schritt (C) eingeführt wird, eine Lösung aus hydroxyethylierter Zellulose, einer Hydroxypropyl-Zellulose, Dextran, Pullulan, Polyoxyethylen, Polyacrylamid oder Poly(vinylalkohol) ist.

22. Verfahren gemäß einem der Ansprüche 1 bis 16, wobei das Gemisch ein Gemisch aus geladenen Molekülen mit einer molaren Masse von weniger als 1000 g / Mol ist.

23. Verfahren gemäß Anspruch 22, **dadurch gekennzeichnet, dass** der Schritt (A) ein Schritt der Elektrophorese ohne Trennmedium ist, wodurch eine Trennung der Makromoleküle gemäß ihrem Verhältnis von Ladung zu Masse ermöglicht wird, und **dadurch**, dass das Trennmedium, das in Schritt (C) eingeführt wird, eine Lösung aus einer nicht geladenen chiralen Verbindung ist, wodurch in Schritt (C) eine Trennung der in der isolierten Fraktion vorhandenen Verbindungen entsprechend ihrer Affinität gegenüber der chiralen Verbindung durchgeführt wird.

24. Verfahren gemäß Anspruch 22, **dadurch gekennzeichnet, dass** der Schritt (A) ein Schritt der Elektrophorese ohne Trennmedium ist, wodurch eine Trennung der Makromoleküle entsprechend ihrem Verhältnis von Ladung zu Masse ermöglicht wird, und dadurch, dass das Trennmedium, das in dem Schritt (C) eingeführt wird, eine Lösung aus einem Tensid ist, wodurch in Schritt (C) eine Trennung der in der isolierten Fraktion vorhandenen Verbindungen entsprechend ihrem hydrophoben Charakter durchgeführt wird.

25. Verwendung eines Verfahrens gemäß einem der Ansprüche 1 bis 24 zur Analyse der am Ende des Schrittes (C) getrennten Komponenten, wobei die getrennten Verbindungen von der Kapillare in Richtung zu einer Analysevorrichtung injiziert werden.
